# EUROPEAN PATENT APPLICATION

(11) **EP 4 611 146 A1**
(43) Date of publication of application: **03.09.2025**
(21) Application number: 23936424.3
(22) Date of filing: 17.11.2023
(51) Int. Cl.: H01M 50/289, H01M 50/209

(54) **REINFORCING HOLDER FOR BATTERY, AND BATTERY AND ELECTRIC DEVICE**

(30) Priority: 08.05.2023 CN 202321086493 U
(71) Applicant: Contemporary Amperex Technology Co., Limited, Ningde, Fujian 352100 (CN)
(72) Inventor: JIN, Haizu, Ningde, Fujian 352100 (CN); YE, Weiqing, Ningde, Fujian 352100 (CN); HAN, Fengsheng, Ningde, Fujian 352100 (CN); LI, Ting, Ningde, Fujian 352100 (CN)
(74) Representative: Kraus & Lederer PartGmbB
(86) International application number: PCT/CN2023/132384
(87) International publication number: WO 2024/230120

(57) **Abstract**

A reinforcing bracket (120) for a battery, a battery (200), and a power consuming apparatus (1000) are provided. The battery includes a plurality of battery cells (10), the reinforcing bracket includes a connecting bracket (121) and a plurality of partition members (122), the connecting bracket includes a first reinforcing plate (1211), a plurality of avoidance holes (121a) that are spaced apart along a first direction are provided on the first reinforcing plate, the plurality of partition members are spaced apart along the first direction on the connecting bracket, and a placement space (124) is defined between the adjacent partition members and the connecting bracket.

## Description

### CROSS-REFERENCE TO RELATED APPLICATIONS

The present application claims priority to Chinese Patent Application No. 202321086493.6, filed with the China National Intellectual Property Administration on May 8, 2023 and entitled "REINFORCING BRACKET FOR BATTERY, BATTERY, AND POWER CONSUMING APPARATUS", which is incorporated herein by reference in its entirety.

### TECHNICAL FIELD

The present application belongs to the technical field of batteries, and specifically, to a reinforcing bracket for a battery, a battery, and a power consuming apparatus.

### BACKGROUND

A battery generally includes a box and a plurality of battery cells disposed in the box.

In the related art, to ensure structural strength between adjacent battery cells, a plurality of limiting members configured to limit the battery cells are generally disposed in the box.

However, currently, structural strength of the limiting members is relatively low, and a large space is occupied due to cooperation between the plurality of limiting members. Consequently, the limiting members cannot be configured to effectively limit the battery cells, and an energy density of the battery is further reduced. Therefore, a limiting member that has high structural strength and occupies a small space is urgently needed.

### SUMMARY

To this end, a first aspect of this application provides a reinforcing bracket for a battery, to effectively limit a plurality of battery cells and ensure an energy density of the battery.

According to the reinforcing bracket for a battery in embodiments of this application, the battery includes a plurality of battery cells, and the reinforcing bracket includes: a connecting bracket, where the connecting bracket includes a first reinforcing plate, a plurality of avoidance holes that are spaced apart along a first direction are provided on the first reinforcing plate, each of the avoidance holes runs through the first reinforcing plate in a second direction, and the first direction is perpendicular to the second direction; and a plurality of partition members, where the plurality of partition members are spaced apart on the connecting bracket along the first direction, and a placement space for placing the battery cells is defined between the adjacent partition members and the connecting bracket.

According to the reinforcing bracket for a battery in embodiments of this application, the first reinforcing plate is disposed on the reinforcing bracket, to improve structural strength of the reinforcing bracket, so as to ensure that the battery cells can be stably limited by the reinforcing bracket, thereby improving position stability of the battery cells and ensuring structural strength between the adjacent battery cells. In addition, the reinforcing bracket is disposed to include the plurality of partition members that are spaced apart along the first direction. The placement space is formed on the reinforcing bracket through cooperation between the plurality of partition members and the connecting bracket, and the battery cells are placed in the placement space. At least one battery cell can be limited by the reinforcing bracket, to resolve the technical problem that a space for disposing the battery cells is reduced due to disposition of the plurality of reinforcing brackets, thereby improving the energy density of the battery. In addition, the battery cells can be prevented from being displaced in the first direction through cooperation between the plurality of partition members, thereby stably limiting the battery cell by the reinforcing bracket, and further improving the position stability of the battery cells.

In some embodiments, the reinforcing bracket further includes second reinforcing plates, where the second reinforcing plates are disposed on at least one side of each placement space in a third direction, and the third direction is separately disposed perpendicular to the first direction and the second direction. The second reinforcing plates not only can improve the structural strength of the reinforcing bracket, but also can directly limit the battery cells, thereby improving the position stability of the battery cells in the placement space.

In some embodiments, the second reinforcing plates are disposed on two sides of each placement space in the third direction, to further improve the structural strength of the reinforcing bracket. In addition, the battery cells may be further limited through cooperation between the two second reinforcing plates, to avoid displacement of the corresponding battery cell in the third direction, thereby ensuring the structural strength between the adjacent battery cells.

In some embodiments, the second reinforcing plates separately protrude from two sides of the same partition member in the first direction. In this way, one second reinforcing plate may be simultaneously disposed on side portions of two adjacent placement spaces, so that two battery cells are simultaneously limited by one second reinforcing plate. In this way, production costs and manufacturing difficulty of the reinforcing bracket can be reduced while the position stability of the battery cell is improved.

In some embodiments, a height of the second reinforcing plate is less than a height of the partition member in the second direction. While ensuring the reinforcing effect of the second reinforcing plates, materials of the second reinforcing plates may be further reduced, so as to reduce manufacturing costs of the reinforcing bracket and further reduce difficulty in forming the reinforcing bracket.

In some embodiments, the second reinforcing plates and the connecting bracket are spaced apart, to further reduce difficulty in forming the reinforcing bracket, and processing efficiency of the reinforcing bracket is improved.

In some embodiments, a through-hole is provided on each partition member, and the through-hole runs through the partition member in the first direction. While the manufacturing costs of the partition member are reduced by setting the through-hole, it is further conducive to imply a fixed connection between the adjacent battery cells, thereby improving connection strength of the adjacent battery cells. In addition, heat dissipation of the battery cells may be further accelerated, and normal expansion between the adjacent battery cells may be ensured, thereby improving service safety of the battery cells.

In some embodiments, the connecting bracket includes an annular enclosing plate, the enclosing plate is connected to an outer edge of the first reinforcing plate, and the enclosing plate extends along the second direction. In addition, while the structural strength of the reinforcing bracket is improved, the battery cells may be further limited by the enclosing plate, to avoid displacement of the battery cells, thereby ensuring the structural strength between the adjacent battery cells.

In some embodiments, the reinforcing bracket is symmetrically disposed along a first center line extending parallel to the first direction. In this way, the reinforcing bracket is formed as a symmetric member that is symmetrically disposed along the first center line, to reduce processing difficulty of the reinforcing bracket, and to ensure uniform limiting strength of the reinforcing bracket on the plurality of battery cells, and improve the position stability of the plurality of battery cells.

In some embodiments, the reinforcing bracket is symmetrically disposed along a second center line parallel to the second direction. In this way, the reinforcing bracket is formed as a symmetric member that is symmetrically disposed along the second center line, to further reduce processing difficulty of the reinforcing bracket, and to ensure uniform limiting strength of the reinforcing bracket on the plurality of battery cells, and improve reliability of the entire battery.

According to a second aspect, this application provides a battery, including a reinforcing bracket, where the reinforcing bracket is the reinforcing bracket in the foregoing embodiments; and a plurality of battery cells, where the battery cells are placed in each placement space, the first reinforcing plate is located on an outer side of the corresponding battery cell, and an electrode terminal of each battery cell passes through a corresponding avoidance hole.

In the technical solutions of the embodiments of this application, the reinforcing bracket in the foregoing embodiments is used, so that structural stability and reliability of the battery can be effectively ensured, and an energy density of the battery can be improved.

In some embodiments, an adhesive layer is disposed between the reinforcing bracket and each of the battery cells. The battery cells are fixed in the placement space of the reinforcing bracket by the adhesive layer, to improve connection strength between the battery cells and the reinforcing bracket, thereby making relative positions between the reinforcing bracket and the battery cells stable, and achieving an objective of limiting the battery cells and reinforcing a structure by the reinforcing bracket.

In some embodiments, the battery further includes a box, where the plurality of battery cells are disposed in the box, and the reinforcing bracket is fixed to the box. The reinforcing bracket and the plurality of battery cells are supported by the box, to improve relative position stability between the reinforcing bracket and the plurality of battery cells.

According to a third aspect, this application provides a power consuming apparatus, including a battery, where the battery is the battery in the foregoing embodiments, and the battery is configured to provide electric energy.

In the technical solutions of the embodiments of this application, the battery in the foregoing embodiments is used, that is, the reinforcing bracket in the foregoing embodiments is used, so that structural stability of the power consuming apparatus can be effectively improved and structural strength of the power consuming apparatus can be ensured.

Additional aspects and advantages of the present application will be given in the following descriptions, some of which will become apparent from the following descriptions or may be learned from practices of the present application.

### BRIEF DESCRIPTION OF THE DRAWINGS

The foregoing and/or additional aspects and advantages of the present application will become apparent and comprehensible in the embodiment description made with reference to the following accompanying drawings.
FIG. 1 is a schematic diagram of a battery according to some embodiments of the present application;
FIG. 2 is a schematic diagram of a reinforcing bracket cooperating with a plurality of battery cells according to some embodiments of the present application;
FIG. 3 is a schematic diagram of a reinforcing bracket according to some embodiments of the present application;
FIG. 4 is a partial enlarged view of a region I in FIG. 3;
FIG. 5 is a top view of a reinforcing bracket according to some embodiments of the present application;
FIG. 6 is a front view of a reinforcing bracket according to some embodiments of the present application; and
FIG. 7 is a schematic diagram of a power consuming apparatus according to some embodiments of the present application.

Reference numerals:
1000. Power consuming apparatus;
200. battery;
10A. battery unit;
10. battery cell;
11. side wall; 111. first side wall; 112. second side wall;
12. electrode terminal;
30. box;
120. reinforcing bracket;
121. connecting bracket;
1211. first reinforcing plate; 121a. avoidance hole;
1212. enclosing plate;
122. partition member; 1221. through-hole;
123. second reinforcing plate;
124. placement space;
X. first direction; Y. second direction; and Z. third direction.

### DETAILED DESCRIPTION

To make the objectives, technical solutions, and advantages of embodiments of this application clearer, the following clearly describes the technical solutions in the embodiments of the present application with reference to the accompanying drawings in the embodiments of the present application. Apparently, the described embodiments are merely some rather than all of the embodiments of the present application. All other embodiments obtained by a person of ordinary skill in the art based on embodiments of the present application without making creative efforts shall fall within the protection scope of the present application.

Unless otherwise defined, meanings of all technical and scientific terms used in the present application are the same as those commonly understood by a person skilled in the art to which the present application belongs; and the terms used in the descriptions of the present application are merely for the purpose of describing specific embodiments, but are not intended to limit the present application. The terms "comprise" and "have" and any variations thereof in the specification and the claims of the present application as well as the descriptions of the accompanying drawings are intended to cover non-exclusive inclusion. The terms "first", "second" and the like in the specification and claims of the present application or the above accompanying drawings are used to distinguish different objects, rather than to describe a specific order or primary-secondary relationship.

"Embodiment" mentioned in this application means that specific features, structures, or characteristics described with reference to the embodiment may be included in at least one embodiment of the present application. The term appearing at different positions of the specification may not refer to the same embodiment or an independent or alternative embodiment that is mutually exclusive with another embodiment. A person skilled in the art explicitly or implicitly understands that the embodiments described in the specification may be combined with other embodiments.

In the descriptions of the present application, it should be noted that, unless otherwise expressly specified and limited, the terms "mount", "connect", "connection" and "attachment" should be understood in a broad sense. For example, the connection may be a fixed connection, a detachable connection, or an integral connection; or the connection may be a direct connection, an indirect connection through an intermediate medium, or internal communication between two elements. A person of ordinary skill in the art may understand the specific meanings of the foregoing terms in the present application according to specific situations.

The term "and/or" in the present application only describes an association relationship for describing associated objects and represents that three relationships may exist. For example, A and/or B may represent the following three cases: Only A exists, both A and B exist, and only B exists. In addition, the character "/" in the present application generally indicates an "or" relationship between the associated objects.

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

In the present application, "a plurality of" means two or more (including two).

Nowadays, from the perspective of development of the market situation, batteries 200 are increasingly applied. Batteries 200 are not only used in energy storage power systems such as a water power plant, a fire power plant, a wind power plant, and a solar power plant, but also in electric transportations such as electric bicycles, electric motorcycles, electric vehicles, as well as in military equipment, aerospace and other fields.

With continuous expansion of application fields of the battery 200, market demands for the battery 200 are also expanding.

In a manufacturing process of the battery 200, a battery cell 10 is a basic element forming the battery 200. A plurality of battery cells 10 are generally arranged in a box 30 in a specific order. In addition, during arrangement of the battery cells 10, the battery cells 10 need to be limited by a limiting member, to limit positions of the battery cells 10, so as to improve position stability of the battery cells 10 and ensure structural strength between adjacent battery cells 10, thereby finally forming the battery 200 having relatively high structural strength and specific reliability.

However, the applicant notes that in the existing battery 200, structural strength of the limiting member is relatively poor, and the battery cells 10 cannot be effectively limited. Consequently, a phenomenon that the battery cells 10 shake occurs. In addition, a plurality of limiting members need to be disposed for the plurality of battery cells 10 in the box 30. As a result, a capacity for deploying the battery cells 10 in the box 30 is reduced, and an energy density of the battery 200 is reduced.

To resolve the foregoing problems, the embodiments of this application provide a reinforcing bracket 120 that can improve the energy density of the battery 200 and effectively limit the battery cells 10. A specific solution is that a first reinforcing plate 1211 is disposed on a connecting bracket 121 of the reinforcing bracket 120, and a plurality of partition members 122 cooperating with the connecting bracket 121 are disposed. Structural strength of the reinforcing bracket 120 is improved by the first reinforcing plate 1211, so that the reinforcing bracket 120 can effectively limit and fix the battery 200. Through cooperation between the plurality of partition members 122, a placement space 124 is formed on the reinforcing bracket 120 to accommodate the battery cells 10, so that one reinforcing bracket 120 can simultaneously limit at least one battery cell 10, to resolve a technical problem that a space for disposing the battery cells 10 is reduced due to disposition of a plurality of reinforcing brackets 120, thereby improving the energy density of the battery 200. In addition, the positions of the battery cells 10 may be further limited through cooperation of the plurality of partition members 122, to effectively ensure a limiting effect of the reinforcing bracket 120, so that the reinforcing bracket 120 can limit each of the battery cells 10, thereby increasing structural strength between the plurality of battery cells 10.

It should be noted that, the battery 200 disclosed in the embodiments of this application may be used in but not be limited to a power consuming apparatus 1000 such as a vehicle, a ship, or an aircraft. A power supply system including the battery 200 disclosed in this application and constituting the power consuming apparatus 1000 may be used. In this way, it is conducive to improve service safety of the power supply system in the power consuming apparatus 1000, and can improve a service life of the power supply system.

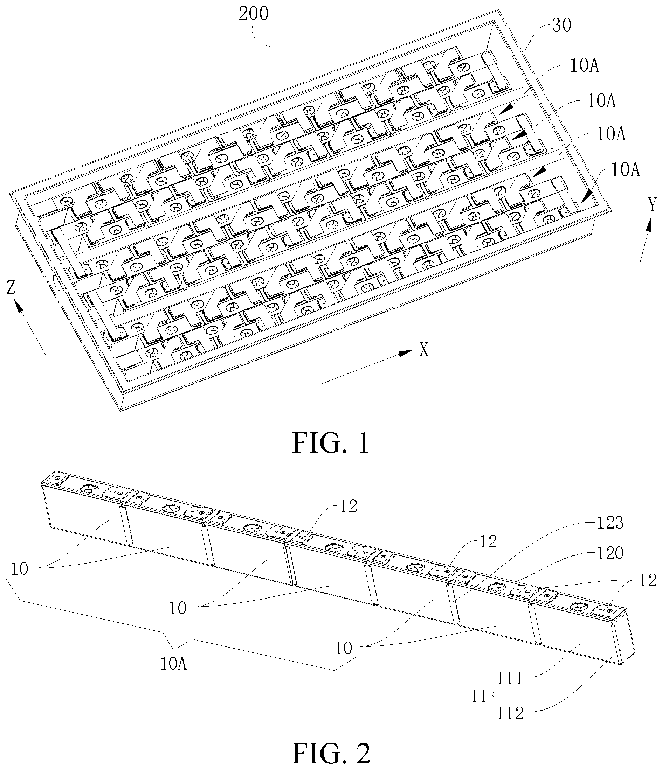

The reinforcing bracket 120 of the battery 200 in the embodiments of the present application is described below with reference to FIG. 1 to FIG. 6.

As shown in FIG. 1 and FIG. 2, the battery 200 in the embodiments of the present application includes a plurality of battery cells 10. The plurality of battery cells 10 are used in cooperation to improve a capacity of the battery 200, and ensure that the battery 200 can effectively supply power to the power consuming apparatus 1000, to ensure operating performance of the battery 200.

It should be noted that, in the battery 200 in the present application, the battery 200 may be formed by the plurality of battery cells 10 connected in series, in parallel, or in series-parallel. Series-parallel connection means that the plurality of battery cells 10 are connected both in series and in parallel. This is not specifically limited in the present application.

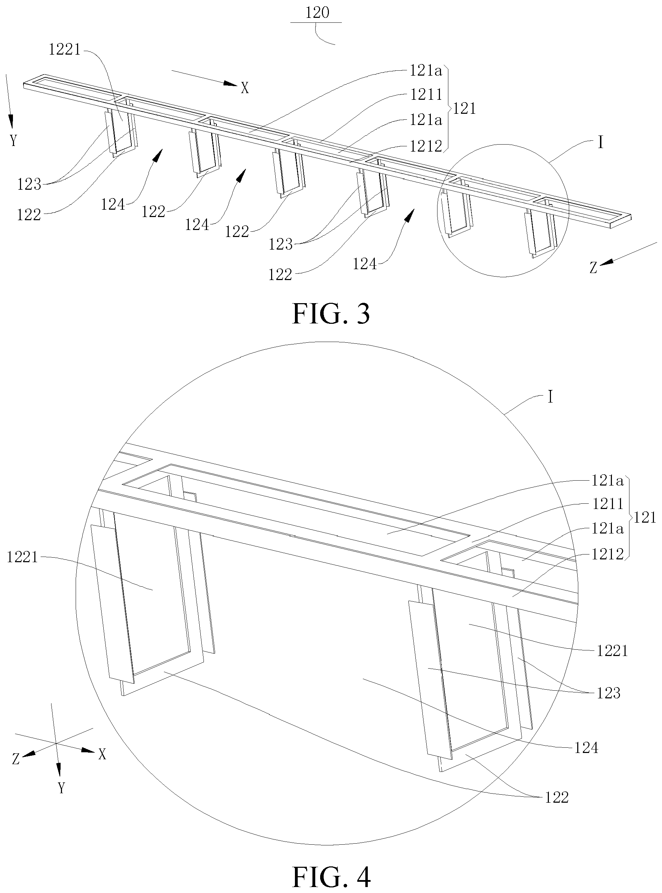

As shown in FIG. 2 and FIG. 3, the reinforcing bracket 120 in the embodiments of the present application includes a connecting bracket 121 and a plurality of partition members 122.

As shown in FIG. 3, FIG. 4, and FIG. 5, the connecting bracket 121 includes a first reinforcing plate 1211, a plurality of avoidance holes 121a are provided on the first reinforcing plate 1211, the plurality of avoidance holes 121a are spaced apart along a first direction X, each avoidance hole 121a runs through the first reinforcing plate 1211 in a second direction Y, and the first direction X is perpendicular to the second direction Y. The first direction X described herein may be understood as the direction X shown in FIG. 3, namely, a length direction of the reinforcing bracket 120. The second direction Y may be understood as the direction Y shown in FIG. 3, namely, a height direction of the reinforcing bracket 120.

In other words, the plurality of avoidance holes 121a that are spaced apart along the length direction of the reinforcing bracket 120 are provided on the first reinforcing plate 1211 in the present application and each avoidance hole 121a runs through the first reinforcing plate 1211 in the height direction of the reinforcing bracket 120, so that a plurality of avoidance through-holes that are in communication with two opposite sides of the first reinforcing plate 1211 are provided on the first reinforcing plate 1211. In this way, while the battery cell 10 is fixed by the reinforcing bracket 120, it is convenient to extend a part of a structure on the battery cell 10 through the avoidance hole 121a, to implement an electrical connection between the battery cells 10, that is, avoid affecting assembly of the battery 200 due to disposition of the reinforcing bracket 120, thereby ensuring portability of assembly of the battery 200.

In addition, the avoidance hole 121a is provided, so that it is further conducive to reducing a material of the first reinforcing plate 1211, reducing production costs of the first reinforcing plate 1211, and reducing a weight of the first reinforcing plate 1211.

It should be noted that, in this application, the reinforcing bracket 120 is disposed to include the first reinforcing plate 1211, so that structural strength of the reinforcing bracket 120 can be improved by the first reinforcing plate 1211, to ensure that the reinforcing bracket 120 can effectively limit the battery cells 10, improve position stability of the battery cells 10, and further improve structural strength between the plurality of battery cells 10.

As shown in FIG. 3, FIG. 4, and FIG. 6, the plurality of partition members 122 are spaced apart on the connecting bracket 121 along the first direction X. A placement space 124 is defined between adjacent partition members 122 and the connecting bracket 121. The placement space 124 is used for placing a placement space 124 of the battery cells 10. The plurality of partition members 122 are spaced apart on the connecting bracket 121 along the length direction of the reinforcing bracket 120. In addition, after the plurality of partition members 122 and the connecting bracket 121 are assembled, the placement space 124 used for placing the battery cells 10 is defined between the adjacent partition members 122 and the connecting bracket 121, and the battery cells 10 are placed in the placement space 124, to fix the battery cells 10 by the reinforcing brackets 120. In addition, the battery cells 10 may be further limited by the adjacent partition members 122, to prevent the battery cells 10 from being displaced in the first direction X, thereby improving the position stability of the battery cells 10.

In addition, the plurality of partition members 122 are disposed on the reinforcing bracket 120 in the present application, and one placement space 124 can be defined between each two adjacent partition members 122. In this way, in a process of using the reinforcing bracket 120, a quantity of placement spaces 124 can be properly designed according to a quantity of to-be-fixed battery cells 10, to ensure that one reinforcing bracket 120 can simultaneously support a plurality of battery cells 10, so as to reduce a quantity of used reinforcing brackets 120. In this way, while a cost of using the reinforcing bracket 120 is reduced, a space occupied by the reinforcing bracket 120 can be further reduced, to resolve the technical problem in the related art that a space for disposing the battery cells 10 is reduced due to disposition of the plurality of reinforcing brackets 120, thereby improving the energy density of the battery 200.

Therefore, it can be learnt from the foregoing structure that, the connecting bracket 121 including the first reinforcing plate 1211 is disposed in the reinforcing bracket 120 of the battery 200 in the present application, to improve the structural strength of the reinforcing bracket 120 by the first reinforcing plate 1211, thereby ensuring that the battery cells 10 can be effectively limited by the reinforcing brackets 120, improving position stability of the battery cells 10, and increasing structural strength between the plurality of battery cells 10.

In addition, the reinforcing bracket 120 is disposed to include the plurality of partition members 122 that are spaced apart along the first direction X. In this way, after the plurality of partition members 122 and the connecting bracket 121 are assembled, the reinforcing bracket 120 including the placement space 124 may be formed, and the battery cells 10 are placed in the placement space 124. The plurality of battery cells 10 may be simultaneously fixed by the reinforcing brackets 120, to resolve the technical problem that the space for disposing the battery cells 10 is reduced due to disposition of the plurality of reinforcing brackets 120, thereby improving the energy density of the battery 200. In addition, corresponding battery cells 10 may be further limited and fixed by the plurality of partition members 122, to prevent the battery cells 10 from being displaced in the first direction X, thereby further improving the position stability of the battery cells 10.

It should be further noted that, the placement space 124 is formed in the reinforcing bracket 120, so that during assembly of the reinforcing bracket 120 and the battery cells 10, the battery cells 10 may be directly disposed in the placement space 124 in a manner of cooperation. With such a structural design, a structural member connecting the reinforcing bracket 120 and the battery cells 10 may be omitted, which not only helps reduce a weight of the entire battery 200, but also simplifies an assembly process, to reduce difficulty in assembling and disassembling the reinforcing bracket 120 and the battery cells 10, and further reduce production costs.

It can be learnt from the above that, while the battery cells 10 are fixed by the reinforcing bracket 120 in this application, the position stability of the battery cells 10 can be effectively improved and structural strength between the plurality of battery cells 10 can be increased, difficulty in assembly between the reinforcing bracket 120 and the battery cells 10 can be further reduced, and the energy density of the battery 200 can be ensured.

It may be understood that, compared with the related art, in the present application, the first reinforcing plate 1211 is disposed on the reinforcing bracket 120 and the reinforcing bracket 120 includes the plurality of placement spaces 124. While the position stability of the battery cells 10 is improved and the structural strength among the plurality of battery cells 10 is increased by the reinforcing bracket 120, it is further conducive to ensure the energy density of the battery 200.

Optionally, the plurality of partition members 122 are fixedly connected to the connecting bracket 121. While the plurality of partition members 122 are disposed on the connecting bracket 121, connection strength between the plurality of partition members 122 and the connecting bracket 121 may be further ensured. In this way, this helps support the plurality of partition members 122 by the connecting bracket 121, to improve position stability of a plurality of supporting members 122, so that the plurality of placement spaces 124 having stable structures are formed to accommodate the battery cells 10.

It should be noted that, the fixed connection described herein may be non-detachable connection such as soldering connection or adhesive connection, or may be detachable connection such as bolt connection or clamping connection. This is not specifically limited in the present application, provided that it is ensured that the plurality of partition members 122 can be stably connected to the connecting bracket 121.

Certainly, in some other embodiments, the plurality of partition members 122 may also be integrally formed on the connecting bracket 121, to ensure the connection strength between the plurality of partition members 122 and the connecting bracket 121.

Optionally, the first reinforcing plate 1211 is a steel plate, an aluminum plate, or a glass fiber plate, to ensure structural strength of the first reinforcing plate 1211, so as to improve the structural strength of the reinforcing bracket 120 by the first reinforcing plate 1211.

In addition, through the foregoing disposition, displacement of the battery cells 10 may be further limited by the first reinforcing plate 1211, to further improve the position stability of the battery cells 10.

In a specific example, the first reinforcing plate 1211 is mainly configured to limit positions of the battery cells 10 in the second direction Y.

In some embodiments, as shown in FIG. 1 and FIG. 2, the battery 200 includes a plurality of groups of battery units 10A, each group of battery units 10A includes a plurality of battery cells 10, and each reinforcing bracket 120 is disposed corresponding to one group of battery units 10A. In this way, the plurality of battery cells 10 in a group of battery units 10A are simultaneously limited by one reinforcing bracket 120, and a quantity of used reinforcing brackets 120 is further reduced and the energy density of the battery 200 is improved while structural strength of the battery units 10A is increased.

In some embodiments, as shown in FIG. 2, FIG. 3, and FIG. 4, the reinforcing bracket 120 further includes a second reinforcing plate 123. The second reinforcing plates 123 are disposed on at least one side of each placement space 124 in a third direction Z, and the third direction Z is separately disposed perpendicular to the first direction X and the second direction Y. The third direction Z described herein may be understood as the direction Z shown in FIG. 3, namely, a width direction of the reinforcing bracket 120.

Therefore, the above may also be understood as that, second reinforcing plates 123 are disposed on at least one side of each placement space 124 in the width direction of the reinforcing bracket 120. In this case, the battery cells 10 in the placement space 124 may be limited and fixed by the second reinforcing plates 123, to improve the position stability of the battery cells 10 in the placement space 124. In addition, the structural strength of the reinforcing bracket 120 may be further improved by the second reinforcing plates 123, to improve limiting quality of the reinforcing bracket 120.

In other words, the second reinforcing plates 123 in the present application may be configured to limit the battery cells 10 in the placement space 124. In addition, the structural strength of the reinforcing bracket 120 may be further improved, so that the reinforcing bracket 120 can stably limit the battery cells 10, thereby improving the position stability of the battery cells 10, increasing the structural strength between the plurality of battery cells 10, and improving reliability of the battery 200.

In a specific example, the first reinforcing plate 1211 is mainly configured to limit positions of the battery cells 10 in the third direction Z.

Optionally, as shown in FIG. 3 and FIG. 4, the second reinforcing plate 123 is disposed on the partition member 122, to support the second reinforcing plates 123 by the partition member 122, and position stability of the second reinforcing plates 123 is improved, so that the structural strength of the reinforcing bracket 120 is improved by the second reinforcing plate 123, and the positions of the battery cells 10 are limited by the second reinforcing plates 123.

Optionally, the second reinforcing plates 123 are disposed on the partition member 122 in a connection manner such as soldering connection, adhesive connection, or bolting connection, to implement a fixed connection between the second reinforcing plates 123 and the partition member 122, ensure connection strength between the second reinforcing plates 123 and the partition member 122, and improve the position stability of the second reinforcing plates 123.

Optionally, the second reinforcing plates 123 are steel plates, aluminum plates, or glass fiber plates, to ensure that the second reinforcing plates 123 have specific structural strength, so as to improve the structural strength of the reinforcing bracket 120 by the second reinforcing plates 123 and ensure that displacement of the battery cells 10 can be effectively limited by the second reinforcing plates 123.

In some embodiments, as shown in FIG. 3 and FIG. 4, in the third direction Z, the second reinforcing plates 123 are disposed on two sides of each placement space 124. In this way, while the battery cells 10 are disposed in the placement space 124, the battery cells 10 may be limited through cooperation between the second reinforcing plates 123 on two opposite sides of the placement space 124, to effectively avoid displacement of the battery cells 10 in the third direction Z, thereby improving the position stability of the battery cells 10 in the placement space 124, and improving the structural strength among the plurality of battery cells 10.

In addition, through the foregoing disposition, the reinforcing bracket 120 in the present application may further include a plurality of second reinforcing plates 123. The plurality of second reinforcing plates 123 cooperate with each other to further improve the structural strength of the reinforcing bracket 120, and ensure a reinforcing effect and a limiting effect of the reinforcing bracket 120.

In some embodiments, as shown in FIG. 3 and FIG. 4, in the first direction X, the second reinforcing plates 123 separately protrude from two sides of the same partition member 122. In this way, one second reinforcing plate 123 may be simultaneously disposed on a same side portion of two adjacent placement spaces 124, to achieve an objective of simultaneously limiting and fixing two battery cells 10 by one second reinforcing plate 123. In this way, while the position stability of the battery cells 10 is improved, a quantity of disposed second reinforcing plates 123 may be further reduced, to reduce production costs and manufacturing difficulty of the reinforcing bracket 120.

Optionally, as shown in FIG. 3 and FIG. 4, the second reinforcing plates 123 are disposed on the partition member and two opposite ends of the second reinforcing plate 123 in the first direction X respectively extend in a direction away from each other, so that in the first direction X, the second reinforcing plates 123 can separately protrude from two sides of the same partition member 122, to achieve an objective of simultaneously limiting two battery cells 10 by one second reinforcing plate 123.

Optionally, as shown in FIG. 2, a plurality of side walls 11 are disposed on each battery cell 10, the plurality of side walls 11 include a first side wall 111 and a second side wall 112, the first side wall 111 is connected to the second side wall 112, and the first side wall 111 is a side wall 11 having a largest area of the battery cell 10. It may also be understood herein that, each battery cell 10 includes the first side wall 111 and the second side wall 112 that are connected to each other. An area of the second side wall 112 is less than an area of the first side wall 111, so that the first side wall 111 is a "large surface" of the battery cell 10.

Optionally, as shown in FIG. 2 and FIG. 3, the second reinforcing plates 123 are respectively disposed on two sides of the placement space 124 and abut against and cooperate with the first side wall 111 of the battery cell 10, so that displacement of the corresponding battery cell 10 in the third direction Z is limited by the second reinforcing plates 123.

It should be noted that, because the first side wall 111 is the "large surface" of the battery cell 10, the second reinforcing plates 123 are disposed to cooperate with the first side wall 111 of the battery cell 10, so that by increasing a cooperation area between the second reinforcing plates 123 and the first side wall 111, limiting quality and reinforcing quality of the reinforcing bracket 120 can be improved, to effectively improve position stability of the battery cell 10 and increase the structural strength between the plurality of battery cells 10 by the reinforcing bracket 120.

In some embodiments, as shown in FIG. 3 and FIG. 4, in the second direction Y, a height of the second reinforcing plate 123 is less than a height of the partition member 122. In other words, in the height direction of the reinforcing bracket 120, the height of the second reinforcing plate 123 is less than the height of the partition member 122. In this way, while ensuring a reinforcing function of the second reinforcing plates 123, materials of the second reinforcing plates 123 can be further reduced, so as to reduce manufacturing costs of the reinforcing bracket 120 and further reduce difficulty in forming the reinforcing bracket 120.

In addition, the height of the second reinforcing plate 123 is set to be less than the height of the partition member 122, so that assembly difficulty between the second reinforcing plates 123 and the partition member 122 may be further reduced, to ensure that the second reinforcing plates 123 can be effectively disposed on the partition member 122, so as to achieve an objective that the partition member 122 supports the second reinforcing plates 123, and improve the position stability of the second reinforcing plates 123.

Certainly, in some other examples, in the second direction Y, the height of the second reinforcing plate 123 may also be set to be equal to the height of the partition member 122. In this way, while ensuring that the second reinforcing plates 123 can be effectively disposed on the partition member 122, it can be further ensured that the second reinforcing plates 123 have a sufficient area, so that the structural strength of the reinforcing bracket 120 is improved by the second reinforcing plates 123, and a cooperation area between the second reinforcing plates 123 and the first side wall 111 is increased. In this way, displacement of the battery cell 10 can be effectively limited by the second reinforcing plates 123.

In some embodiments, as shown in FIG. 3 and FIG. 4, second reinforcing plates 123 and the connecting bracket 121 are spaced apart, to further reduce difficulty in forming the reinforcing bracket 120 and improve processing efficiency of the reinforcing bracket 120.

In addition, because the height of the second reinforcing plate 123 is less than the height of the partition member 122, after the second reinforcing plates 123 and the connecting bracket 121 are spaced apart, the second reinforcing plates 123 can be disposed close to the middle of the partition member 122 in a height direction. In this way, while the second reinforcing plates 123 abut against and cooperate with the first side wall 111 of the battery cell 10, the second reinforcing plates 123 can abut against at a position in the middle of the first side wall 111 in the second direction Y, to ensure that a structure in which the first side wall 111 is located on an upper part of the second direction Y and a structure in which the first side wall 111 is located on a lower part of the second direction Y are uniformly limited, and ensure that displacement of the battery cells 10 in the third direction Z can be effectively limited by the second reinforcing plates 123.

In a specific example, as shown in FIG. 3 and FIG. 4, in a height direction of the reinforcing bracket 120, the height of the second reinforcing plate 123 is less than the height of the partition member 122, and in a process of connecting the second reinforcing plates 123 and the partition member 122, the second reinforcing plates 123 and the connecting bracket 121 are spaced apart, to reduce assembly difficulty of the reinforcing bracket 120, improve assembly efficiency, and ensure a limiting effect of the reinforcing bracket 120.

Certainly, in some other examples, the second reinforcing plates 123 may also be connected to the connecting bracket 121, to support the second reinforcing plates 123 by the connecting bracket 121, thereby improving position stability of the second reinforcing plates 123.

In some embodiments, as shown in FIG. 3 and FIG. 4, a through-hole 1221 is provided on each partition member 122, and the through-hole 1221 runs through the partition member 122 in the first direction X. In this way, the through-hole running through the partition member 122 is formed on the partition member 122. The through-hole is provided, so that manufacturing costs of the partition member 122 can be effectively reduced, that is, manufacturing costs of the reinforcing bracket 120 can be reduced, and lightweight of the reinforcing bracket 120 is also implemented.

In addition, in a process of assembling the battery cells 10 and the reinforcing bracket 120, two adjacent battery cells 10 are located on two opposite sides of the partition member 122 in the first direction X. The through-hole 1221 is provided on the partition member 122, so that it is convenient to connect the two adjacent battery cells 10 through the through-hole 1221, to improve connection strength between the adjacent battery cells 10 and ensure reliability of the battery 200. In addition, it is further conducive to accelerate heat dissipation of the battery cells 10 and ensure normal expansion between the adjacent battery cells 10, thereby improving service safety of the battery cells 10.

Optionally, in the first direction X, the two adjacent battery cells 10 are connected by a heat conduction adhesive. While the two adjacent battery cells 10 are fixedly connected, a heat dissipation effect of the battery cells 10 may be further improved.

In some embodiments, as shown in FIG. 3 and FIG. 4, the connecting bracket 121 includes an annular enclosing plate 1212. The enclosing plate 1212 is connected to an outer edge of the first reinforcing plate 1211. The enclosing plate 1212 extends along the second direction Y. In other words, the annular enclosing plate 1212 extends along the height direction of the reinforcing bracket 120, so that the enclosing plate 1212 has a specific extension area, thereby improving structural strength of the reinforcing bracket 120 by the enclosing plate 1212.

In addition, because the enclosing plate 1212 is connected to the outer edge of the first reinforcing plate 1211, after the enclosing plate 1212 is disposed to extend along the second direction Y, the enclosing plate 1212 may be extended to an outer side of the placement space 124, to limit displacement of the battery cells 10 by the enclosing plate 1212, thereby improving the position stability of the battery cells 10.

In a specific example, a part of the enclosing plate 1212 is located on two opposite sides of the placement space 124 in the third direction Z, so that displacement of the battery cell 10 in the third direction Z is limited by the enclosing plate 1212, and another part of the enclosing plate 1212 is located on an outer side of two outermost placement spaces 124 in the first direction X, to limit displacement of the entire battery unit 10A in the first direction X by the enclosing plate 1212.

In other words, displacement of a single battery cell 10 in the first direction X may be limited through cooperation between the two adjacent partition members 122, and the displacement of the entire battery unit 10A in the first direction X may be limited by the enclosing plate 1212, to improve structural stability and structural strength of the battery unit 10A.

Optionally, the enclosing plate 1212 is a steel plate, an aluminum plate, or a glass fiber plate, to ensure that the enclosing plate 1212 has specific structural strength, thereby ensuring that the displacement of the battery cell 10 can be effectively limited by the enclosing plate 1212.

Optionally, as shown in FIG. 3, in the second direction Y, the enclosing plate 1212 and the second reinforcing plates 123 are spaced apart, to further reduce difficulty in forming the reinforcing bracket 120 and improve processing efficiency of the reinforcing bracket 120.

Certainly, in some other examples, the enclosing plate 1212 may also be connected to the second reinforcing plates 123, so that relative position stability of the enclosing plate 1212 and the second reinforcing plates 123 is ensured, thereby improving the limiting quality of the reinforcing bracket 120.

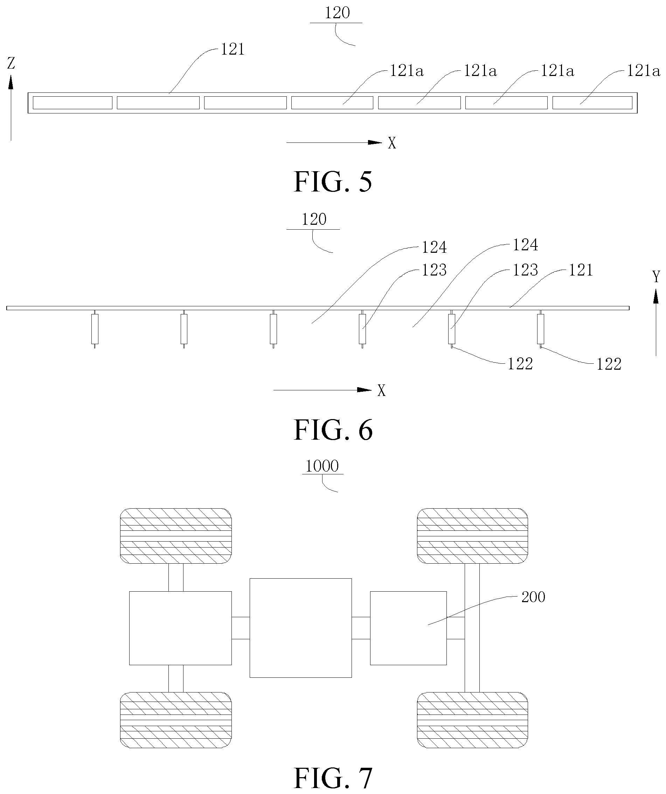

In some embodiments, as shown in FIG. 3 and FIG. 5, the reinforcing bracket 120 is symmetrically disposed along a first center line extending parallel to the first direction X. An extension direction of the first center line is parallel to the first direction X, and the reinforcing bracket 120 is symmetrically disposed along the first center line, so that the reinforcing bracket 120 is formed as a symmetric member symmetrically disposed along the first center line, that is, structures of the reinforcing brackets 120 located on the two opposite sides of the third direction Z are symmetrically disposed, to reduce processing difficulty of the reinforcing bracket 120, and further ensure uniform reinforcing strength and limiting strength of the reinforcing bracket 120 on the plurality of battery cells 10 in the third direction Z, thereby improving the position stability of the plurality of battery cells 10.

In some embodiments, as shown in FIG. 3 and FIG. 6, the reinforcing bracket 120 is symmetrically disposed along a second center line parallel to the second direction Y. An extension direction of the second center line is parallel to the second direction Y, and the reinforcing bracket 120 is symmetrically disposed along the second center line, so that the reinforcing bracket 120 is formed as a symmetric member symmetrically disposed along the second center line, that is, structures of the reinforcing brackets 120 located on the two opposite sides of the first direction X are symmetrically disposed, to further reduce processing difficulty of the reinforcing bracket 120, and further ensure uniform reinforcing strength and limiting strength of the reinforcing bracket 120 on the plurality of battery cells 10 in the first direction X, thereby improving the position stability of the plurality of battery cells 10.

In conclusion, it can be learned from the above that, the reinforcing bracket 120 in this application is not only symmetrically disposed along the first center line extending parallel to the first direction X, but also symmetrically disposed along the second center line extending parallel to the second direction Y, to maximally reduce the processing difficulty of the reinforcing bracket 120, and improve the reinforcing quality of the reinforcing bracket 120.

The following describes the reinforcing bracket 120 of the battery 200 in this application in detail with reference to the accompanying drawings of the specification.

As shown in FIG. 3 and FIG. 4, the reinforcing bracket 120 is symmetrically disposed along the first center line extending parallel to the first direction X and is symmetrically disposed along the second center line extending parallel to the second direction Y, and the reinforcing bracket 120 includes: a connecting bracket 121, a partition member 122, and second reinforcing plates 123.

With reference to FIG. 3, FIG. 4, and FIG. 5, the connecting bracket 121 includes a first reinforcing plate 1211 and an annular enclosing plate 1212. A plurality of avoidance holes 121a are provided on the first reinforcing plate 1211. The plurality of avoidance holes 121a are spaced apart along the first direction X and each of the avoidance holes 121a runs through the first reinforcing plate 1211 in the second direction Y. The enclosing plate 1212 is connected to the outer edge of the first reinforcing plate 1211 and the enclosing plate 1212 extends along the second direction Y.

As shown in FIG. 3, FIG. 4, and FIG. 6, a plurality of partition members 122 are spaced apart on the connecting bracket 121 along the first direction X. A through-hole 1221 is provided on each partition member 122. The through-hole 1221 runs through the partition member 122 in the first direction X. A placement space 124 is defined between adjacent partition members 122 and the connecting bracket 121. The placement space 124 is used for placing the battery cells 10.

As shown in FIG. 3 and FIG. 4, second reinforcing plates 123 are disposed on two opposite sides of each placement space 124 in the third direction Z, and in the first direction X, the second reinforcing plates 123 separately protrude from two sides of the same partition member 122, so that one second reinforcing plate 123 is simultaneously located on side portions of two adjacent placement spaces 124.

In addition, as shown in FIG. 3 and FIG. 4, in the second direction Y, the height of the second reinforcing plate 123 is less than the height of the partition member 122, so that the second reinforcing plates 123 and the connecting bracket 121 are spaced apart.

A battery 200 in the embodiment of the second aspect in the present application is described below with reference to the accompanying drawings in this specification.

As shown in FIG. 1 and FIG. 2, the battery 200 in the embodiments of the present application includes a reinforcing bracket 120 and a plurality of battery cells 10.

As shown in FIG. 2, the reinforcing bracket 120 is the foregoing reinforcing bracket 120, and a specific structure of the reinforcing bracket 120 is not described herein again.

As shown in FIG. 2 and FIG. 3, battery cells 10 are placed in each placement space 124, the first reinforcing plate 1211 is located on an outer side of the corresponding battery cells 10, and an electrode terminal 12 of each of the battery cells 10 passes through a corresponding avoidance hole 121a. While the reinforcing bracket 120 in the present application is used in the battery 200, the battery cells 10 are placed in each placement space 124, and the first reinforcing plate 1211 is located on the outer side of the corresponding battery cells 10, so that partition members 122 on two sides of the placement space 124 and the first reinforcing plate 1211 cooperate with each other to limit the battery cells 10, to improve position stability of the battery cells 10 and ensure structural strength between adjacent battery cells 10.

In addition, while the battery cells 10 are placed in the placement space 124, the electrode terminal 12 of each of the battery cells 10 further passes through the corresponding avoidance hole 121a, to prevent the reinforcing bracket 120 from hindering cooperative connection between the electrode terminals 12.

In other words, in the present application, while structural strength of the reinforcing bracket 120 is improved by the first reinforcing plate 1211, the first reinforcing plate 1211 may further avoid the electrode terminals 12 of the battery cells 10, so that the electrode terminals 12 of the battery cells 10 can extend out of the corresponding avoidance hole 121a, to facilitate an electrical connection between the battery cells 10, reduce assembly difficulty of the battery 200, and improve assembly efficiency.

It should be noted that, because the reinforcing bracket 120 in the embodiments of the present application has the foregoing technical effect, the battery 200 in the embodiments of the present application also has the foregoing technical effect. That is, the reinforcing bracket 120 in the present application is used, so that structural stability of the battery 200 and reliability of the battery 200 can be effectively ensured, and an energy density of the battery 200 can be improved.

Optionally, the electrode terminal 12 and a peripheral wall of the avoidance hole 121a are spaced apart, to avoid interference between the reinforcing bracket 120 and the electrode terminal 12, thereby facilitating improving an insulation property between the reinforcing bracket 120 and the electrode terminal 12.

Optionally, the avoidance hole 121a is further used for avoiding a pressure relief structure of the battery cell 10. The pressure relief structure is disposed on the battery cell 10. While the battery cell 10 is placed in the placement space 124, the pressure relief structure of each battery cell 10 may also pass through a corresponding avoidance hole 121a, to prevent the reinforcing bracket 120 from hindering pressure relief of the pressure relief structure, that is, ensure that the battery cell 10 can effectively perform pressure relief by the pressure relief structure, thereby improving service safety of the battery cell 10, that is, ensuring service safety of the battery 200.

In some examples, as shown in FIG. 1 and FIG. 2, the battery 200 includes a plurality of reinforcing brackets 120 and a plurality of groups of battery units 10A. Each group of battery units 10A includes a plurality of battery cells 10, and the plurality of reinforcing brackets 120 are in one-to-one correspondence with the plurality of groups of battery units 10A, so that the plurality of battery cells 10 in the group of battery units 10A are simultaneously supported by one reinforcing bracket 120, and an energy density of the battery 200 can be further improved while the structural strength of the battery 200 is improved.

In some embodiments, an adhesive layer is disposed between the reinforcing bracket 120 and each of the battery cells 10. The adhesive layer is used to implement a fixed connection between the reinforcing bracket 120 and each of the battery cells 10, to ensure that the battery cells 10 can be stably disposed in the placement space 124 of the reinforcing bracket 120, improve the position stability of the battery cells 10 relative to the reinforcing bracket 120, and achieve an objective of limiting and reinforcing the battery cells 10 by the reinforcing bracket 120, thereby ensuring structural strength between the adjacent battery cells 10.

Optionally, the adhesive layer is a formed by a heat conduction structural adhesive. In this way, while the reinforcing bracket 120 is fixedly connected to the battery cells 10 by the adhesive layer, the adhesive layer may be further used to conduct heat generated during operation of the battery cells 10, to improve efficiency of heat dissipation of the battery cells 10, thereby ensuring service safety of the battery cells 10, and prolonging the service life of the battery cells 10.

In some embodiments, as shown in FIG. 1 and FIG. 2, the battery 200 further includes a box 30, a plurality of battery cells 10 are disposed in the box 30, and the reinforcing bracket 120 is fixed to the box 30. In other words, both the plurality of battery cells 10 and the reinforcing brackets 120 are disposed in the box 30, so that the reinforcing brackets 120 are disposed close to positions of the plurality of battery cells 10, thereby facilitating limiting the plurality of battery cells 10 by the reinforcing bracket 120. In addition, the box 30 may be further used to support the reinforcing bracket 120 and the plurality of battery cells 10, so that relative position stability between the reinforcing bracket 120 and the plurality of battery cells 10 is improved, that is, the limiting effect of the reinforcing bracket 120 is improved.

In some examples, an accommodating cavity is formed in the box 30, and the plurality of battery cells 10 and the reinforcing brackets 120 are all disposed in the accommodating cavity, so that the plurality of battery cells 10 and the reinforcing brackets 120 are disposed in the box 30.

The box 30 may use a plurality of structures.

In some embodiments, the box 30 may include a first portion and a second portion. The second portion may be a hollow structure with one end open, the first portion may be a plate-shaped structure, and the first portion covers an opening side of the second portion, so that the first portion and the second portion jointly define the accommodating cavity accommodating the battery cells 10 and the reinforcing brackets 120. Alternatively, both the first portion and the second portion may also be hollow structures with one side open, and an opening side of the first portion covers an opening side of the second portion, so that the first portion and the second portion jointly define the accommodating cavity accommodating the battery cells 10 and the reinforcing brackets 120. Certainly, the box 30 formed by the first portion and the second portion may have various shapes, such as a cylinder, a cuboid, and the like.

Optionally, as shown in FIG. 1, FIG. 2, and FIG. 3, the battery cells 10 are disposed in the placement space 124 of the reinforcing bracket 120 and are located between a bottom wall of the box 30 and the first reinforcing plate 1211 in the second direction Y. In this case, displacement of the battery cells 10 in the second direction Y may be limited through cooperation between the bottom wall of the box 30 and the first reinforcing plate 1211, to limit the battery cells 10 by the reinforcing bracket 120.

Optionally, as shown in FIG. 1, FIG. 2, and FIG. 3, the battery cells 10 are respectively disposed on two sides of each partition member 122 in the first direction X, and an outermost battery cell 10 of the battery unit 10A in the first direction X is disposed between one of the partition members 122 and an inner wall of the box 30. In this way, displacement of the outermost battery cell 10 of the battery unit 10A in the first direction X is limited through cooperation between the partition member 122 and the inner wall of the box 30, thereby improving structural strength of the battery unit 10A.

In conclusion, the reinforcing bracket 120 in this application may be configured to limit displacement of each of the battery cells 10 in the first direction X, the second direction Y, and the third direction Z, prevent slippage of the battery cells 10 in the first direction X, the second direction Y, and the third direction Z, improve the position stability of the battery cells 10, ensure the structural strength between the adjacent battery cells 10, and increase the structural stability of the battery 200.

The following describes the power consuming apparatus 1000 in the embodiment in the third aspect in the present application with reference to the accompanying drawings in the specification.

As shown in FIG. 7, the power consuming apparatus 1000 in this embodiment of the present application includes the battery 200 in the foregoing embodiment, and the battery 200 is configured to provide electric energy.

Because the battery 200 in this embodiment of the present application has the foregoing technical effect, the power consuming apparatus 1000 in this embodiment of the present application also has the foregoing technical effect. That is, structural stability of the power consuming apparatus 1000 can be effectively improved and structural strength of the power consuming apparatus 1000 can be ensured by the battery 200 in the present application.

It should be noted that, the embodiment in the third aspect in the present application provides a power consuming apparatus 1000 using the battery 200 as a power supply. The power consuming apparatus 1000 may include but is not limited to a mobile phone, a tablet, a notebook computer, an electric toy, an electric tool, an electric scooter, an electric vehicle, a vehicle, a ship, a spacecraft, or the like. The electric toy may include a fixed or mobile electric toy, such as a game console, an electric vehicle toy, an electric ship toy, or an electric airplane toy. The spacecraft may include an airplane, a rocket, a space shuttle, a spaceship, or the like.

As shown in FIG. 7, while the power consuming apparatus 1000 is the vehicle, the vehicle may be a fuel vehicle, a gas vehicle, or a new energy vehicle. The new energy vehicle may be a pure electric vehicle, a hybrid electric vehicle, an extended-range electric vehicle, or the like. The battery 200 is disposed inside the vehicle, and the battery 200 may be disposed at a bottom, head, or tail of the vehicle. The battery 200 may be configured to provide electric energy for the vehicle. For example, the battery 200 may be used as an operating power supply for the vehicle. The vehicle may further include a controller and a motor, where the controller is used for controlling the battery 200 to provide electric energy for the motor to be used for, for example, operating electricity requirements during start-up, navigation and running of the vehicle.

In some embodiments of the present application, the battery 200 may not only serve as the operating power supply for the vehicle, but also serve as a driving power supply for the vehicle, to replace or partially replace fuel or natural gas to provide driving power for the vehicle.

It may be understood that, other configurations and operations of the reinforcing bracket 120 for a battery 200, the battery 200, and the power consuming apparatus 1000 according to the embodiments of the present application are known to a person of ordinary skill in the art, and will not be described in detail herein.

It should be noted that the embodiments in the present application and features in the embodiments may be combined with each other without conflicts.

The foregoing descriptions are merely preferred embodiments of the present application, and are not intended to limit the present application. For a person skilled in the art, the present application may have a variety modifications and changes. Any modification, equivalent replacement, or improvement made without departing from the spirit and principle of the present application shall fall within the protection scope of the present application.

## Claims

1. A reinforcing bracket for a battery, wherein the battery comprises a plurality of battery cells, and the reinforcing bracket comprises:
a connecting bracket, wherein the connecting bracket comprises a first reinforcing plate, a plurality of avoidance holes that are spaced apart along a first direction are provided on the first reinforcing plate, each of the avoidance holes runs through the first reinforcing plate in a second direction, and the first direction is perpendicular to the second direction; and
a plurality of partition members, wherein the plurality of partition members are spaced apart on the connecting bracket along the first direction, and a placement space for placing the battery cells is defined between the adjacent partition members and the connecting bracket.

2. The reinforcing bracket for a battery according to claim 1, further comprising:
second reinforcing plates, wherein the second reinforcing plates are disposed on at least one side of each placement space in a third direction, and the third direction is separately disposed perpendicular to the first direction and the second direction.

3. The reinforcing bracket for a battery according to claim 2, wherein the second reinforcing plates are disposed on two sides of each placement space in the third direction.

4. The reinforcing bracket for a battery according to claim 2 or 3, wherein the second reinforcing plates separately protrude from two sides of the same partition member in the first direction.

5. The reinforcing bracket for a battery according to any one of claims 2 to 4, wherein a height of the second reinforcing plate is less than a height of the partition member in the second direction.

6. The reinforcing bracket for a battery according to claim 5, wherein the second reinforcing plates and the connecting bracket are spaced apart.

7. The reinforcing bracket for a battery according to any one of claims 1 to 6, wherein a through-hole is provided on each partition member, and the through-hole runs through the partition member in the first direction.

8. The reinforcing bracket for a battery according to any one of claims 1 to 7, wherein the connecting bracket comprises an annular enclosing plate, the enclosing plate is connected to an outer edge of the first reinforcing plate, and the enclosing plate extends along the second direction.

9. The reinforcing bracket for a battery according to any one of claims 1 to 8, wherein the reinforcing bracket is symmetrically disposed along a first center line extending parallel to the first direction.

10. The reinforcing bracket for a battery according to claim 9, wherein the reinforcing bracket is symmetrically disposed along a second center line parallel to the second direction.

11. A battery, comprising:
a reinforcing bracket, wherein the reinforcing bracket is the reinforcing bracket according to any one of claims 1 to 10; and
a plurality of battery cells, wherein the battery cells are placed in each placement space, a first reinforcing plate is located on an outer side of the corresponding battery cell, and an electrode terminal of each of the battery cells passes through a corresponding avoidance hole.

12. The battery according to claim 11, wherein an adhesive layer is disposed between the reinforcing bracket and each of the battery cells.

13. The battery according to claim 11 or 12, further comprising a box, wherein the plurality of battery cells are disposed in the box, and the reinforcing bracket is fixed to the box.

14. A power consuming apparatus, comprising the battery according to any one of claims 11 to 13, wherein the battery is configured to supply electric energy.
